# EUROPEAN PATENT APPLICATION

(11) **EP 2 784 983 A1**
(43) Date of publication of application: **01.10.2014**
(21) Application number: 13190906.1
(22) Date of filing: 30.10.2013
(51) Int. Cl.: H04L 12/26, H04L 29/08

(54) **Communication control device, server, communication system and computer readable medium**

(30) Priority: 29.03.2013 JP 2013074521
(71) Applicant: Kabushiki Kaisha Toshiba, Minato-ku, Tokyo 105-8001 (JP); Toshiba Lighting & Technology Corporation, Yokosuka-shi, Kanagawa 237-8510 (JP)
(72) Inventor: Minami, Keisuke, Tokyo, 105-8001 (JP); Ajitomi, Daisuke, Tokyo, 105-8001 (JP); Goto, Masataka, Tokyo, 105-8001 (JP); Yamamoto, Takayuki, Kanagawa, 237-8510 (JP); Nakagawa, Tatsuya, Kanagawa, 237-8510 (JP); Kishimoto, Takuya, Kanagawa, 237-8510 (JP)
(74) Representative: Bokinge, Ole

(57) **Abstract**

According to an embodiment, a communication control device includes a first connecting unit, a connection maintaining unit, and a disconnection detector. The first connecting unit is configured to connect to a server via a network and establish a connection with the server. The connection maintaining unit is configured to transmit a packet for maintaining the connection to the server when a non-communication state of the connection continues for a predetermine time. The disconnection detector is configured to detect a packet stoppage state. When the disconnection detector has detected the packet stoppage state, the connection maintaining unit shortens the predetermined time.

## Description

### FIELD

Embodiments described herein relate generally to a communication control device, a server, a communication system, and a computer readable medium.

### BACKGROUND

Some communication control devices of related art allow remote control of in-home devices from external devices, but cannot perform real-time remote control when in-home devices cannot be accessed by external devices. Furthermore, although there is a method for allowing real-time remote control even when in-home devices cannot be accessed by external devices and avoiding factors of disconnection such as timeout of a proxy server that are explicitly notified, there is no method for avoiding factors of disconnection that are not explicitly notified. The factors of disconnection that are explicitly notified refer to factors of disconnection for which there is an explicit notification of disconnection due to timeout or the like. On the other hand, the factors of disconnection that are not explicitly notified refer to factors of disconnection for which there is no explicit notification of disconnection due to timeout or the like. Examples of the factors of disconnection that are not explicitly notified include an NAT timeout, a firewall timeout, and a PPPoE timeout.

As mentioned above, communication control devices of related art are disadvantageous in that factors of disconnection that are not explicitly notified cannot be avoided.

### BRIEF DESCRIPTION OF THE DRAWINGS

FIG. 1 is a diagram illustrating an entire system according to a first embodiment;
FIG. 2 is a block diagram illustrating a functional configuration of a communication control device according to the first embodiment;
FIG. 3A is a flowchart illustrating a flow of a process of changing time interval between packet transmissions at the communication control device according to the first embodiment;
FIG. 3B is a flowchart illustrating a flow of a process of changing a connection method at the communication control device according to the first embodiment; and
FIG. 4 is a block diagram illustrating a functional configuration of a server according to the first embodiment.

### DETAILED DESCRIPTION

According to an embodiment, a communication control device includes a first connecting unit, a connection maintaining unit, and a disconnection detector. The first connecting unit is configured to connect to a server via a network and establish a connection with the server. The connection maintaining unit is configured to transmit a packet for maintaining the connection to the server when a non-communication state of the connection continues for a predetermine time. The disconnection detector is configured to detect a packet stoppage state. When the disconnection detector has detected the packet stoppage state, the connection maintaining unit shortens the predetermined time.

Embodiments will be described in detail below with reference to the drawings. Note that the present invention is not limited to the embodiments.

### First Embodiment

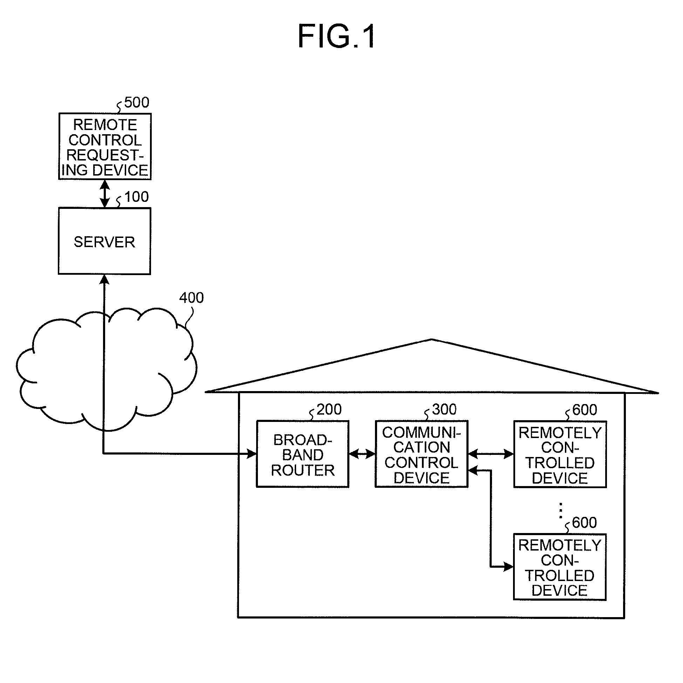

FIG. 1 is a diagram illustrating the entire communication system in which a communication control device according to a first embodiment is used. As illustrated in FIG. 1, the communication system includes a remote control requesting device 500, a communication control device 300, a broadband router 200, a server 100, and a plurality of remotely controlled devices 600. The remote control requesting device 500 is a mobile phone, a smart phone, or a PC, for example, that is connected to the server 100 via a network 400 such as the Internet. The communication control device 300 is connected to the broadband router 200 in a state in which the communication control device 300 can communicate with the server 100 via the network 400 such as the Internet. Alternatively, the communication control device 300 may have the functions of the broadband router 200 and thus be integrated therewith. The communication control device 300 is a device that controls communication of the broadband router 200. The communication control device 300 can connect and communicate with the remotely controlled devices 600 (home appliances such as an air conditioner, lighting equipment, and a digital television set, for example) via a network such as a wired LAN (Ethernet (registered trademark)), a wireless LAN (802.11a, b, g, n), a PAN (Bluetooth (registered trademark), ZigBee (registered trademark)). The communication control device 300 and a remotely controlled device 600 may be integrated with each other. In this case, the number of the remotely controlled devices 600 may be one.

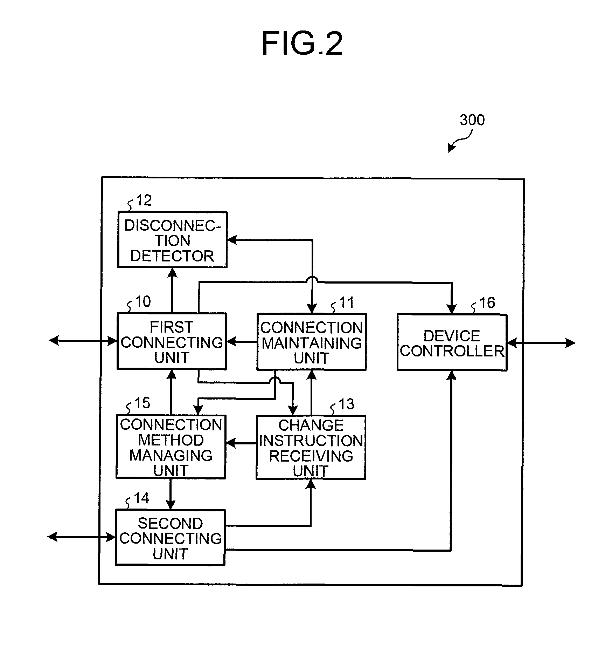

FIG. 2 is a block diagram illustrating a detailed configuration of the communication control device. The communication control device 300 includes a first connecting unit 10, a connection maintaining unit 11, a disconnection detector 12, a change instruction receiving unit 13, a second connecting unit 14, a connection method managing unit 15, and a device controller 16.

The first connecting unit 10 actively establishes a connection with the server 100. For establishment of a connection, TCP, a protocol such as WebSocket built on TCP, or a protocol called Comet or Long polling based on HTTP, for example, is used. When these connections are established, the first connecting unit 10 can receive in real time remote control commands from the server 100 transmitted at certain timing. The remote control commands transmitted by the server 100 are those received from the remote control requesting device 500 and held by the server 100. Alternatively, the remote control commands may be those issued by the server 100 in response to requests to issue remote control commands from the remote control requesting device 500. Upon receipt of a remote control command from the server 100, the communication control device 300 controls the remotely controlled devices 600 according to the remote control command.

The connection established by the first connecting unit 10 may be explicitly or implicitly disconnected by the broadband router 200 or by a device or the like on a path (which refers to a communication path between the server 100 and the communication control device 300 formed in the network 400 in the present embodiment). In many cases, disconnection occurs when communication has not been conducted for a certain time period through the connection (a state in which communication has not been conducted through a connection will be referred to as a non-communication state) in such cases as an NAT timeout, a proxy timeout, a firewall timeout, and a PPPoE timeout. Thus, disconnection is avoided by transmitting a packet at each predetermined time interval (hereinafter referred to as "a first threshold") so that non-communication time in the non-communication state will not continue. Specifically, after elapse of the predetermined time from the last communication, a packet is transmitted to the server 100 through the first connecting unit 10, and a packet is similarly transmitted after elapse of the predetermined time from the previous packet transmission. The component that performs such operation of transmitting packets to maintain the connection with the server 100 is the connection maintaining unit 11. Note that an explicit disconnection in the present embodiment refers to that a device (other than the server 100 and the communication control device 300) notifies in advance or afterwards the server 100 or the communication control device 300 that a connection will be disconnected or has disconnected, when a connection will be disconnected or may be disconnected and performs disconnection. For example, a proxy timeout falls under an explicit disconnection. A non-explicit (hereinafter referred to as implicit) disconnection in the present embodiment refers to that a device (other than the server 100 and the communication control device 300) performs disconnection without notifying the server 100 and the communication control device 300 that a connection will be disconnected or has disconnected, when a connection will be disconnected or before the connection is disconnected. For example, in an NAT timeout, a firewall timeout or a PPPoE timeout, disconnection is implicit.

Note that the connection between the server 100 and the communication control device 300 is disconnected when packets have not been transmitted through the path (the network, for example) between the communication control device 300 and the server 100. In the present embodiment, when the non-communication state in which no packets flow through the path between the server 100 and the communication control device 300 lasts for the predetermined time interval, a stoppage state is entered as a result of an NAT timeout, for example. Thereafter, the connection between the server 100 and the communication control device 300 is also disconnected.

Note that a packet transmitted by the connection maintaining unit 11 may be a packet to which a response from the server 100 is expected. Examples of the combination of a packet expecting a response and a response packet include a TCP packet and a TCP ACK packet in response thereto, and WebSocket Ping and WebSocket Pong in response thereto, but any packets may be used as long as response is defined in the protocol. The connection maintaining unit 11 transmits such packets and, if there is no response within a certain time period, notifies the disconnection detector 12 of the same since it is assumed that an implicit disconnection has occurred at some point along the path.

In some cases, the connection maintaining unit 11 does not expect any response from the server 100 to a packet transmitted for maintaining a connection. Even in such cases, the disconnection detector 12 can detect the packet stoppage state if the disconnection detector 12 is explicitly notified of disconnection by a device such as a proxy server along the path.

Furthermore, the disconnection detector 12 can also detect the packet stoppage state by receiving a stoppage state notification from the server 100. In this case, the server 100 detects the possibility that implicit disconnection has occurred by using a technique of transmitting to the communication control device 300 a packet expecting a response, and notifies the disconnection detector 12 of the stoppage state. Specific examples of the combination of a packet expecting a response and a response packet include a TCP packet and a TCP ACK packet in response thereto, and WebSocket Ping and WebSocket Pong in response thereto as mentioned above. The server 100 transmits such a packet and detects the possibility that an implicit disconnection has occurred at some point along the path if there is no response within a certain time period. The server 100 realizes this function using a connection checking unit 20 that will be described later.

In particular, in a case of a broadband router 200 or the like that is configured to restore a path in a WAN using reception of a packet from a LAN as a trigger (PPPoE on-demand configuration), disconnection of the path may not be figured out only by transmitting a packet from the communication control device 300. In this case, notification of a stoppage state from the server 100 is necessary. The server 100 cannot transmit notification of a stoppage state through a connection in the stoppage state but may be able to transmit the notification of the stoppage state immediately after some packet is transmitted from the communication control device 300, when the path is restored. The disconnection detector 12 in receipt of the notification of the stoppage state from the server 100 can detect the packet stoppage state. Alternatively, the notification of a stoppage state may be transmitted by using another communication means that is not illustrated such as a mail.

When the disconnection detector 12 is notified of an explicit or implicit disconnection in such manners as described above, the connection maintaining unit 11 changes the predetermined time on the basis of which packets are transmitted for maintaining a connection to a shorter time. As a result of shortening the predetermined time, more packets for maintaining a connection are transmitted and the possibility that disconnection can be avoided is thus increased.

If the amount by which the predetermined time that is the basis of packet transmission is shortened is small, disconnection may occur again during the time interval; however, the time interval for packet transmission capable of avoiding disconnection can eventually be set by repeating the operation as described above. As a result, remote control commands can stably be transmitted from the server 100 to the communication control device 300. Note that the value of the predetermined time that is the basis of packet transmission may be determined on the basis of an instruction using an absolute value or a relative value from the server 100 received by the change instruction receiving unit 13.

If, conversely, the predetermined time that is the basis of packet transmission is too short, disadvantages such as a load on the server 100 may occur. Thus, when the interval between transmissions of packets transmitted by the connection maintaining unit 11 becomes smaller than a predetermined second threshold (smaller than the first threshold), the connection method managing unit 15 switches from the connection method used by the first connecting unit 10 to the connection method used by the second connecting unit 14.

The second connecting unit 14 connects to the server 100 by a connection method different from that of the first connecting unit 10. An example of the connection method used by the second connecting unit 14 is a polling method in which the second connecting unit 14 periodically connects to the server 100 and checks whether or not the server 100 has a remote control command. A second example of the connection method used by the second connecting unit 14 is a direct access in which the second connecting unit 14 passively waits for establishment of a connection from the server 100. The second connecting unit 14 can employ either or both of the polling and the direct access. Alternatively, a third connecting unit different from the second connecting unit 14 may be provided and the second connecting unit 14 may employ the polling method while the third connecting unit employs the direct method. In this case, the connection method managing unit 15 may switch to either of the second connecting unit 14 and the third connecting unit. Note that the polling is not real time and the direct access may not be used depending on the network environment such as multiple NAT. On the other hand, the polling and the direct access are more preferable than the connection method used by the first connecting unit 10 in some cases because the load on the server 100 can be kept light by sacrificing the real-time property in the polling or by establishing a connection from the server 100 as necessary when a remote control command is issued or in like cases in the direct access.

The switching of connection methods may be performed based on an instruction received by the change instruction receiving unit 13 from the server 100 that has detected an increase in the load by receiving, for example, packets from the connection maintaining unit 11 at a predetermined frequency or higher. Alternatively, if it is determined that the direct access cannot be employed, the connection method may be switched from that used by the second connecting unit 14 to that used by the first connecting unit 10. As a result, it is possible to perform remote control that is highly real-time by the first connecting unit 10 even in a network environment in which the direct access cannot be employed.

As described above, the disconnection detector 12 detects a stoppage state. For example, when there is no response within a certain time period after transmission of a packet by the connection maintaining unit 11, the stoppage state is detected as a result of the notification to the disconnection detector 12 sent from the connection maintaining unit 11. Alternatively, the stoppage state may be detected as a result of receiving a stoppage state notification from the server 100.

Furthermore, as described above, the change instruction receiving unit 13 can receive an instruction using an absolute value or a relative value from the server 100 for the value of the time interval for packet transmission. The connection maintaining unit 11 can change the time interval between packet transmissions on the basis of the instruction. The change instruction receiving unit 13 can also receive an instruction to switch the connection method from the server 100 as described above. When the time interval between transmissions of packets transmitted by the connection maintaining unit 11 becomes smaller than a predetermined second threshold (smaller than the first threshold), or on the basis of the instruction to switch the connection method received by the change instruction receiving unit 13, the connection method managing unit 15 can switch the connection method. Furthermore, the device controller 16 controls the remotely controlled devices 600 on the basis of a remote control command.

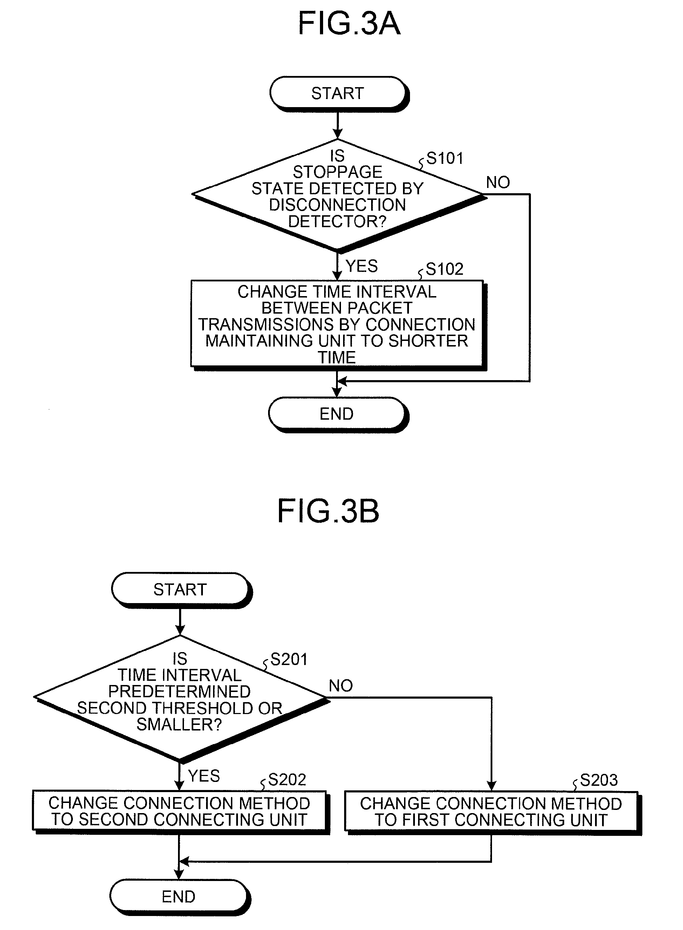

FIG. 3A is a flowchart illustrating a flow of a process of changing time interval between packet transmissions at the communication control device 300. As illustrated in FIG. 3A, the disconnection detector 12 first determines whether or not a stoppage state between the communication control device 300 and the server 100 is detected (step S101). If it is determined that the stoppage state between the communication control device 300 and the server 100 is detected (step S101: Yes), the connection maintaining unit 11 changes the time interval between packet transmissions to a shorter time (step S102). If, on the other hand, the stoppage state between the communication control device 300 and the server 100 is not detected (step S101: No), the process is terminated without any change. Alternatively, the time interval between packet transmissions may be changed to an initial value thereof when a change in the network configuration is detected or when the communication control device is restarted or reset. Furthermore, the time interval between packet transmissions may be changed to a longer time when the stoppage state is not detected (step S101: No) once or a plurality of times.

FIG. 3B is a flowchart illustrating a flow of a process of changing the connection method at the communication control device 300. As illustrated in FIG. 3B, the connection method managing unit 15 first determines whether or not the time interval between packet transmissions is a predetermined second threshold or smaller (step S201). If it is determined that the time interval between packet transmissions is the predetermined second threshold or smaller (step S201: Yes), the connection method is changed to that of the second connecting unit 14 (step S202). If, on the other hand, it is determined that the time interval between packet transmissions is larger than the predetermined second threshold (step S201: No), the connection method is changed to that of the first connecting unit 10 (step S203).

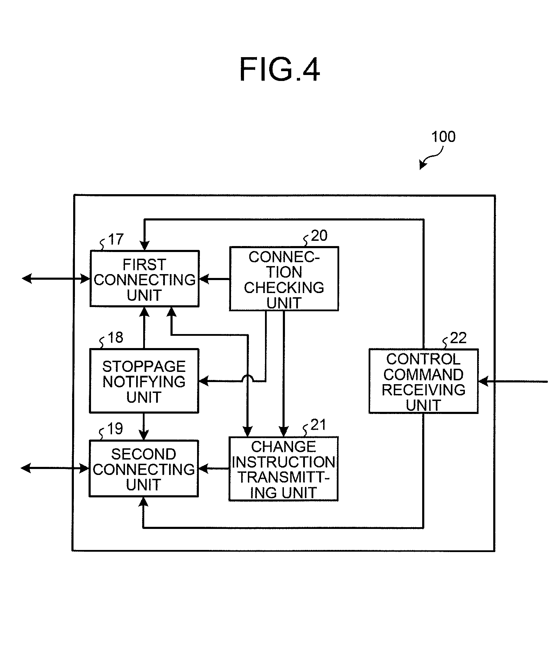

FIG. 4 is a block diagram illustrating a functional configuration of the server 100. The server 100 includes a first connecting unit 17, a second connecting unit 19, a stoppage notifying unit 18, a connection checking unit 20, a change instruction transmitting unit 21, and a control command receiving unit 22.

The control command receiving unit 22 receives and holds remote control commands from the remote control requesting device 500. In response to establishment of a connection from the first connecting unit 10 of the communication control device 300, the first connecting unit 17 notifies the communication control device 300 of a remote control command by using the connection. Furthermore, in receipt of a packet expecting a response notified by the communication control device 300, the first connecting unit 17 notifies the communication control device 300 of the response.

The connection checking unit 20 detects the possibility of occurrence of implicit disconnection by using a technique of transmitting a packet expecting a response. For example, the connection checking unit 20 detects the possibility by checking the stoppage state between the first connecting unit 17 and the first connecting unit 10. Specific examples of the technique of sending a packet expecting a response include a TCP packet and a TCP ACK packet in response thereto, and WebSocket Ping and WebSocket Pong in response thereto. The server 100 transmits such a packet and detects the possibility that an implicit disconnection has occurred at some point along the path if there is no response within a certain time period.

When the connection checking unit 20 has detected that an implicit disconnection occurred, the stoppage notifying unit 18 transmits a stoppage state notification to the communication control device 300. When the connection checking unit 20 has detected that an implicit disconnection occurred, the change instruction transmitting unit 21 can instruct to change the time interval between transmissions of packets transmitted by the communication control device 300 in place of the stoppage state notification by the stoppage notifying unit 18. In this case, the change instruction transmitting unit 21 may also notify the value of the time interval. If it is determined that the set time interval between packet transmissions of the communication control device 300 is too short, the change instruction transmitting unit 21 can also instruct to switch from the connection method used by the first connecting unit 10 to the connection method use by the second connecting unit 14. Note that the fact that the set time interval between packet transmissions of the communication control device 300 is too short may be obtained by detecting the time interval between packet transmissions of the communication control device 300 by the first connecting unit 17 or by receiving the information on the time interval between transmissions from the communication control device 300.

The second connecting unit 19 connects with the second connecting unit 14 of the communication control device 300 by the connection method used by the second connecting unit 14. Examples of the connection method used by the second connecting unit 14 include the polling in which the communication control device 300 periodically connects to the server 100 and checks the presence or the absence of a remote control command, and the direct access in which the server 100 actively establishes a connection and accesses the communication control device 300 as mentioned above.

Although the stoppage notifying unit 18 and the change instruction transmitting unit 21 are provided separately in the present embodiment, a notifying unit having the functions of the both may be provided. Furthermore, an example in which the server 100 notifies a remote control command and in which the communication control device 300 controls remotely controlled devices 600 according to the remote control command is presented. The information exchanged between the server 100 and the communication control device 300, however, is not limited to remote control commands but may be any information items. Specifically, any information items communicated and exchanged in the method used by the first connecting unit 10 and the method used by the second connecting unit 14 may be used. Accordingly, the subject to be controlled by the communication control device 300 is not limited to the remotely controlled devices 600.

Furthermore, although the connection method managing unit 15 of the communication control device 300 switches the connection method on the basis of the interval between packet transmissions for maintaining a connection by the connection maintaining unit 11 in the present embodiment, the connection method may be switched only according to detection by the disconnection detector 12 of the possibility that the connection is disconnected or the fact that the connection is disconnected.

According to the communication control device 300 of the present embodiment described above, connections actively established in various network environments can be maintained by detecting explicit or implicit disconnections. Furthermore, a connection method suitable for the network environment can be employed by switching the connection method to that with lighter load when the load on the server 100 for maintaining a connection becomes high.

Note that the communication control device 300 can be realized by using a general purpose computer system as basic hardware, for example. Specifically, the first connecting unit 10, the second connecting unit 14, the connection maintaining unit 11, the disconnection detector 12, the change instruction receiving unit 13, and the connection method managing unit 15 can be implemented by making a processor mounted on the computer system execute programs. The first connecting unit 10, the second connecting unit 14, the connection maintaining unit 11, the disconnection detector 12, the change instruction receiving unit 13, the connection method managing unit 15, and the device controller 16 may be implemented by making a processor such as a central processing unit (CPU) execute programs, that is, by software, may be implemented by hardware such as an integrated circuit (IC), or may be implemented by combination of software and hardware, for example. In this case, the communication control device 300 may be implemented by installing the programs in the computer system in advance, by storing the programs in a storage medium such as a CD-ROM or distributing the programs via a network and installing the programs as necessary in the computer system. Alternatively, the first connecting unit 10, the second connecting unit 14, the connection maintaining unit 11, the disconnection detector 12, the change instruction receiving unit 13, the connection method managing unit 15, and the device controller 16 can be implemented by using, as appropriate, a memory, a hard disk, or a storage medium such as a CD-R, a CD-RW, a DVD-RAM, and a DVD-R built in or external to the computer system.

Furthermore, the server 100 can be realized by using a general purpose computer system as basic hardware, for example. Specifically, the first connecting unit 17, the second connecting unit 19, the stoppage notifying unit 18, the connection checking unit 20, and the change instruction transmitting unit 21 can be implemented by making a processor mounted on the computer system execute programs. the first connecting unit 17, the second connecting unit 19, the stoppage notifying unit 18, the connection checking unit 20, the change instruction transmitting unit 21, and the control command receiving unit 22 may be implemented by making a processor such as a central processing unit (CPU) execute programs, that is, by software, may be implemented by hardware such as an integrated circuit (IC), or may be implemented by combination of software and hardware, for example. In this case, the server 100 may be implemented by installing the programs in the computer system in advance, by storing the programs in a storage medium such as a CD-ROM or distributing the programs via a network and installing the programs as necessary in the computer system. Alternatively, the first connecting unit 17, the second connecting unit 19, the stoppage notifying unit 18, the connection checking unit 20, the change instruction transmitting unit 21, and the control command receiving unit 22 can be implemented by using, as appropriate, a memory, a hard disk, or a storage medium such as a CD-R, a CD-RW, a DVD-RAM, and a DVD-R built in or external to the computer system.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A communication control device, comprising:
a first connecting unit configured to connect to a server via a network and establish a connection with the server;
a connection maintaining unit configured to transmit a packet for maintaining the connection to the server when a non-communication state of the connection continues for a predetermine time; and
a disconnection detector configured to detect a packet stoppage state, wherein
when the disconnection detector has detected the packet stoppage state, the connection maintaining unit shortens the predetermined time.

2. The device according to claim 1, wherein the disconnection detector detects the packet stoppage state that is not externally notified in an explicit manner.

3. The device according to claim 1 or 2, wherein the disconnection detector transmits a packet expecting a response, and detects the stoppage state by not receiving the response to the packet expecting a response.

4. The device according to claim 1 or 3, wherein the disconnection detector detects the stoppage state by receiving a stoppage state notification from the server.

5. The device according to claim 1 or 4, wherein the connection maintaining unit changes the length of the predetermined time according to an instruction from the server.

6. The device according to claim 1 or 5, further comprising:
a second connecting unit configured to connect to the server by using either a polling method of periodically and actively connecting to the server or a direct access method of accepting establishment of a connection from the server; and
a connection method managing unit configured to switch the connecting unit connecting to the server from the first connecting unit to the second connecting unit when the predetermined time changed by the connection maintaining unit is shorter than a predetermined second threshold.

7. The device according to claim 1 or 5, further comprising:
a second connecting unit configured to connect to the server by using either a polling method of periodically and actively connecting to the server or a direct method of accepting establishment of a connection from the server;
a change instruction receiving unit configured to receive an instruction to change the connection method from the server; and
a connection method managing unit configured to switch the connecting unit connecting to the server from the first connecting unit to the second connecting unit when the change instruction receiving unit has received an instruction to change the connection method.

8. A server, comprising:
a first connecting unit configured to connect to a communication control device via a network, accept establishment of a connection from the communication control device, and receive a packet for maintaining the connection from the communication control device when a non-communication state of the established connection continues for a predetermined time;
a connection checking unit configured to check a packet stoppage state; and
a notifying unit configured to notify the communication control device of the stoppage state when the connection checking unit has detected the stoppage state.

9. The server according to claim 8, wherein the notifying unit instructs the communication control device to change the length of the predetermined time.

10. The server according to claim 8, wherein the notifying unit notifies the communication control device of information specifying the length of the changed predetermined time.

11. The server according to claim 8, further comprising a second connecting unit configured to connect to the communication control device by using a method different from the of the first connecting unit, wherein
the notifying unit notifies the communication control device of a change instruction instructing to connect by the different method through the second connecting unit.

12. A communication system comprising a communication control device and a server, wherein
the communication control device includes:
a first connecting unit configured to connect to the server via a network and establish a connection with the server;
a connection maintaining unit configured to transmit a packet for maintaining the connection to the server when a non-communication state of the connection continues for a predetermine time; and
a disconnection detector configured to detect a packet stoppage state, and
when the disconnection detector has detected the packet stoppage state, the connection maintaining unit shortens the predetermined time.

13. A non-transitory computer readable medium containing a computer program, the program causing a computer to execute:
connecting to a server via a network and establish a connection with the server;
transmitting a packet for maintaining the connection to the server when a non-communication state of the connection continues for a predetermine time;
detecting a packet stoppage state; and
shortening the predetermined time when the packet stoppage state is detected in the detecting.
